# EUROPEAN PATENT APPLICATION

(11) **EP 4 685 084 A1**
(43) Date of publication of application: **28.01.2026**
(21) Application number: 24190751.8
(22) Date of filing: 24.07.2024
(51) Int. Cl.: B65G 1/04

(54) **SERVICE VEHICLE FOR AN AUTOMATED STORAGE AND RETRIEVAL SYSTEM**

(71) Applicant: AutoStore Technology AS, 5578 Nedre Vats (NO)
(72) Inventor: Austrheim, Trond, 5578 Nedre Vats (NO); Myrbakken, Joakim A, 5578 Nedre Vats (NO); Fitje, Martin, 5578 Nedre Vats (NO); Gjerdevik, Øystein, 5578 Nedre Vats (NO)
(74) Representative: Kilburn & Strode LLP

(57) **Abstract**

The disclosure relates to a service vehicle for operation in an automated storage and retrieval system, said automated storage and retrieval system comprising a grid of structural members amongst which a plurality of storage spaces are provided for storing a plurality of storage containers, wherein the service vehicle comprises: a chassis having movement means for moving the service vehicle over the grid in a plurality of vehicle movement directions such as a forward and a backward direction; a user control providing for a user to control the movement means; and a seat for supporting a user; wherein the seat is configurable in at least a first configuration in which the seat faces a first seat direction relative to the chassis, and a second configuration in which the seat faces a second seat direction relative to the chassis.

## Description

### TECHNICAL FIELD

The disclosure relates to a service vehicle for an automated storage and retrieval system. More particularly, it relates to a service vehicle for an automated storage and retrieval system, an automated storage and retrieval system comprising such a service vehicle, and a method of operating such a service vehicle.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid of structural members amongst which a plurality of storage spaces are provided for storing a plurality of storage containers. In such an example, a rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

With existing automated storage and retrieval systems, on occasion, container handling vehicles may malfunction, such that they may become stranded on the grid. In such situations, an operator may need to intervene by performing a maintenance operation on the malfunctioning container handling vehicle, such as e.g. to visit and/or pick up the container handling vehicle, or drag the container handling vehicle off the grid to a maintenance area for repair. For such maintenance operations, sending an operator unaided out onto the grid can be highly dangerous, and so a service vehicle is provided in which an operator can be protected as they drive out onto the grid and as they perform the maintenance operation. Existing service vehicles for automated storage and retrieval systems have not proved entirely satisfactory, and so the present disclosure seeks to provide an improved service vehicle that at least partially addresses deficiencies with existing service vehicles.

### SUMMARY

Aspects and embodiments of the disclosure will now be summarised in the statements below, and one or more aspects of the invention of the present application are set out in the claims.

In a first aspect there is provided a service vehicle for operation in an automated storage and retrieval system, said automated storage and retrieval system comprising a grid of structural members amongst which a plurality of storage spaces are provided for storing a plurality of storage containers, wherein the service vehicle comprises: a chassis having movement means for moving the service vehicle over the grid in a plurality of vehicle movement directions including at least a first vehicle movement direction and a second vehicle movement direction different from the first vehicle movement direction; a user control providing for a user to control the movement means; and a seat for supporting a user; wherein the seat is configurable in at least a first configuration in which the seat faces a first seat direction relative to the chassis, and a second configuration in which the seat faces a second seat direction relative to the chassis, said second seat direction being different from the first seat direction.

Optionally, in the first configuration the seat faces the first vehicle movement direction, and in the second configuration the seat faces the second vehicle movement direction, wherein the first vehicle movement direction is a forward direction and the second vehicle movement direction is a backward direction.

Optionally, the seat is engageable with the chassis in the first configuration and/or in the second configuration.

Optionally, in the first configuration the seat engages with the chassis in a first position on the chassis, and in the second configuration the seat engages with the chassis in a second position on the chassis.

Optionally, the chassis and/or the seat comprises detection means for detecting the seat in the first configuration and/or in the second configuration. Optionally, the detection means comprises a sensor in the form of at least one of: a mechanically operated switch that is operated by virtue of engagement of at least a portion of the seat with at least a portion of the chassis or vice-versa; and a magnetic and/or an optical sensor operated by proximity of at least a portion of the seat with at least a portion of the chassis. Optionally, the detection means comprises a respective sensor for each of the first configuration and the second configuration.

Optionally, the user control is responsive to the detecting, such that when the first configuration is detected the user control is arranged for control of vehicle movement primarily in the first vehicle movement direction, and when the second configuration is detected the user control is arranged for control of vehicle movement primarily in the second vehicle movement direction. Optionally, movement is inhibited when the detection means detects neither the first configuration nor the second configuration. Optionally, a respective speed limit in at least one of the first and second vehicle movement directions is dependent upon the detection.

Optionally, the seat is selectively mountable to the chassis, for changing between the first configuration and the second configuration, by virtue of seat mounting means.

Optionally, the seat is rotatable about a mount on the chassis for changing between the first configuration and the second configuration.

Optionally, the seat is slidable on the chassis by virtue of a rail, for changing between the first configuration and the second configuration.

Optionally, the service vehicle further comprises a safety cage arranged for protecting a user while they are occupying the seat.

Optionally, the user control is mounted to the safety cage in a position that is ergonomically accessible by the user when the seat is in both the first configuration and the second configuration.

Optionally, the user control is mounted in a position substantially midway between the first and second positions.

Optionally, the user control is configured such that it can be stowed to take up less space within the safety cage, or unstowed for use.

Optionally, the user control comprises one or more of a control button, a joystick control, a touch detector, an indicator, a display screen, a sound generator, and a haptic feedback device.

Optionally, the service vehicle is arranged for transporting a container handling vehicle between the grid and a service area by virtue of comprising means for attaching to a container handling vehicle, said container handling vehicle being a vehicle provided in the automated storage and retrieval system for lifting, lowering and transporting storage containers. Optionally, the means for attaching comprises one or more of a robotic arm, a hook, a barb, a fastener, a magnetic attachment and a suction device.

Optionally, the movement means comprises one or more motors.

Optionally, the movement means comprises one or more wheels. Optionally, each of the wheels comprises a hub motor.

Optionally, the service vehicle is arranged for operating in an automated storage and retrieval system in which the structural members comprise a first set of parallel tracks arranged in a substantially horizontal plane and extending in a first grid direction, and a second set of parallel tracks arranged in the plane and extending in a second grid direction that is orthogonal to the first grid direction, wherein the grid comprises a plurality of adjacent vertical columns formed between vertical frame members, each vertical column accessible via a respective opening formed between a pair of neighboring tracks of the first set and a pair of neighboring tracks of the second set, each of said vertical columns arranged for accommodating a plurality of storage containers in a vertical stack.

In a second aspect there is provided an automated storage and retrieval system, comprising: a grid of structural members amongst which a plurality of storage spaces are provided for storing a plurality of storage containers; one or more container handling vehicles operable on the grid for retrieving storage containers from and storing storage containers into the storage spaces, and for transporting the storage containers horizontally across the grid; and the service vehicle of the first aspect.
In a third aspect there is provided a method of operating the service vehicle of the first aspect in an automated storage and retrieval system according to the second aspect, the method comprising: when the seat of the service vehicle is in the first configuration, facilitating control, via the user control, of the movement means to move the service vehicle in the first vehicle movement direction over the grid; and when the seat or a further seat of the service vehicle is in the second configuration, facilitating control, via the user control, of the movement means to move the service vehicle in the second vehicle movement direction over the grid.
Optionally, the method further comprises: before facilitating control of the movement means to move the service vehicle in the first vehicle movement direction, detecting configuration of a seat of the service vehicle in the first configuration; and/or after facilitating control of the movement means to move the service vehicle in the first vehicle movement direction, and before facilitating control of the movement means to move the service vehicle in the second vehicle movement direction, detecting configuration of a seat of the service vehicle in the second configuration.

Optionally, the method further comprises: between facilitating control of the movement means to move the service vehicle in the first vehicle movement direction and detecting configuration of the seat of the service vehicle in the second configuration, facilitating stowing of the user control, and subsequently facilitating unstowing of the user control before facilitating controlling the movement means to move the service vehicle in the second vehicle movement direction.

Optionally, the service vehicle can have a width and/or length equal to that of a single storage cell, or can have a width and/or length of more than one storage cell which can advantageously spread the vehicle and/or operator weight over a greater number of vertical columns, thereby reducing risk of damage to the grid.

Optionally, the service vehicle comprises a drive system for moving the service vehicle over the grid. Optionally, the drive system comprises at least one moving device, said moving device optionally comprising for example a wheel and/or a roller and/or a track and/or a belt. Optionally, the moving device comprises a hub motor arranged within a wheel or roller of the moving devices, or alternatively the moving device may comprise a direct or indirect electric or hydraulic drive system. Optionally, the electric or hydraulic drive system can be arranged inside the external boundaries defined by the moving device.

In the following description, various specific details are introduced by way of example only, to provide for enhanced understanding of embodiments of the claimed system and method. One skilled in the relevant art, however, will understand from this disclosure that these embodiments can be practiced without one or more of the specific details, or with other components, systems, etc. in any combination except where technically incompatible. In other instances, certain existing details are at least partially omitted for clarity purposes, but nevertheless the skilled person will have no difficulty in reproducing the disclosed aspects in the light of this disclosure.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3a shows a side view of a first robotic container-handling vehicle suitable for use in the system of Fig. 1;
Fig. 3b shows a side view of a second robotic container-handling vehicle suitable for use in the system of Fig. 1;
Fig. 3c is a perspective side view of the robot of Fig. 3b;
Fig. 4 shows a computing device for implementing the operations described herein;
Fig. 5a is a perspective view of a grid of an automated storage and retrieval system, said grid formed from a plurality of structural members, also showing a service vehicle arranged for moving over the grid;
Fig. 5b is top-down view of the automated storage and retrieval system and service vehicle as shown in Fig. 5a;
Fig. 5c is a first side view of the automated storage and retrieval system and service vehicle as shown in Fig. 5a;
Fig. 5d is second side view of the automated storage and retrieval system and service vehicle as shown in Fig. 5a, from a direction orthogonal to that of Fig. 5c;
Figs. 6a to 6c are, respectively, front, side and top-down views of a service vehicle according to an embodiment of the disclosure;
Fig. 7a is a perspective view of a service vehicle according to an embodiment of the disclosure, shown with a user control in a horizontal (or "extended" or "unstowed") position ready for operation by a user, and with a seat in a first configuration;
Fig. 7b is a perspective view of the service vehicle, shown with the user control in a raised (or "stowed") position thereby providing an occupant with more room to move around within the vehicle's confines, and with the seat in the first configuration;
Fig. 8a is a perspective view of the service vehicle, shown with the user control in a raised (or "stowed") position thereby providing an occupant with more room to move around within the vehicle's confines, and with the seat in a second configuration;
Fig. 8b is a perspective view of a service vehicle according to an embodiment of the disclosure, shown with a user control in a horizontal (or "extended" or "unstowed") position ready for operation by a user, and with a seat in the second configuration;
Fig. 9a is a perspective view of the service vehicle, shown with the user control in a raised (or "stowed") position thereby providing an occupant with more room to move around within the vehicle's confines, and with the seat installed according to the first configuration and a further seat installed according to the second configuration;
Fig. 9b is a perspective view of a service vehicle according to an embodiment of the disclosure, shown with a user control in a horizontal (or "extended") position ready for operation by a user, and with seats installed according to both the first configuration and the second configuration;
Fig. 9c is a perspective view of the service vehicle of Fig. 9b, with the safety cage omitted for clarity;
Fig. 10a and 10b are, respectively, side-on, and end-on views of the service vehicle of Fig. 9b;
Fig. 11a is a perspective view of the service vehicle of the previous Figs., showing an mounting arrangement by which the seat can be selectively coupled/mounted to the chassis of the service vehicle;
Fig. 11b is a view of the seat showing mounting means of the seat, in this example two (or fewer or more) rods, and a mounting means of the chassis, in this example a mount which is part of or fixed to the chassis, said mount optionally comprising two (or fewer or more) tubes corresponding to the mounting means of the seat, e.g. wherein the rods of the seat can slide into and thereby engage with the tubes of the chassis, or vice versa;
Fig. 12a to 12d show the seat fully engaged with the chassis, and further show a sensor for detecting engagement/disengagement of the seat with the chassis, the sensor in the activated state;
Fig. 13a to 13d show the seat in a state of at least partial disengagement from the chassis, and further show a sensor for detecting engagement/disengagement of the seat with the chassis, the sensor in the inactivated state;
Fig. 14 shows a mechanism in the chassis for allowing a user to manually disengage a parking brake of the chassis, e.g. for in situations where the service vehicle Is not operating normally, and where a user may need to manually propel the service vehicle back to a service area;
Fig. 15 is a method flow diagram illustrating a method of operating the service vehicle shown in the preceding Figs.

In the drawings, like reference numerals have been used to indicate like parts, elements or features unless otherwise explicitly stated or implicitly understood from the context.

### DETAILED DESCRIPTION

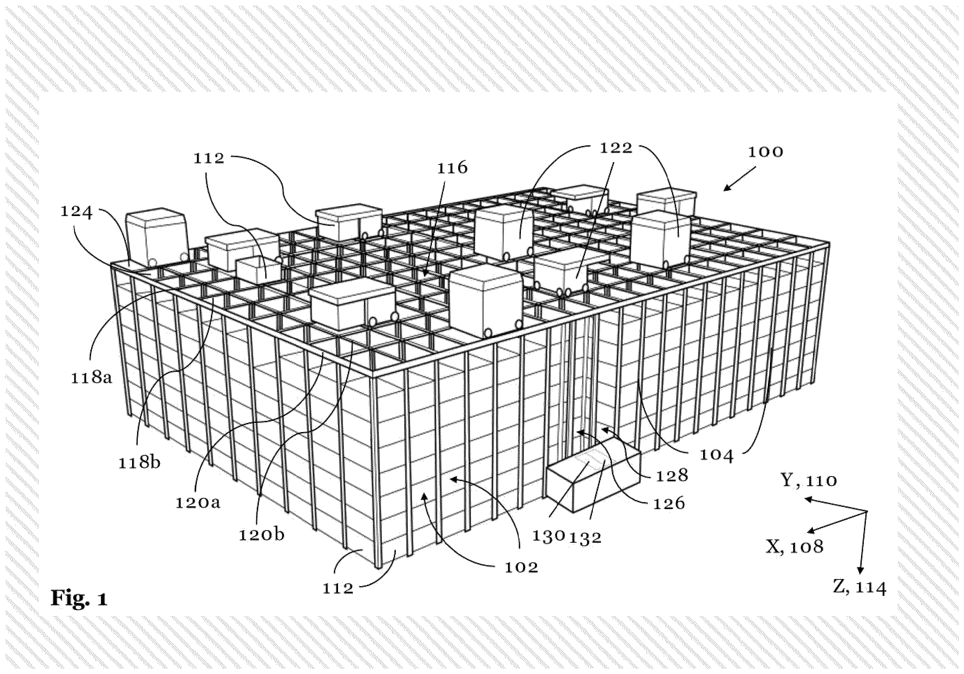

In overview, in existing automated storage and retrieval systems (such as the type described below with reference to Figs. 1 to 4), container handling vehicles may sometimes malfunction, whereupon an operator may need to intervene e.g. by performing a maintenance operation on the malfunctioning container handling vehicle, and so a service vehicle is provided in which the operator is enabled to safely drive out onto the grid and perform the maintenance operation. Such service vehicles typically provide a seat for a user, and a control for the user to control movement of the service vehicle, by which the user can control the service vehicle to drive from a service area (off of the grid) in a first (e.g. forward) vehicle movement direction onto the grid. However a problem exists with existing service vehicles, in that once on the grid, existing service vehicles cannot turn around, and this leads to inefficiency and ineffectiveness of operation. Existing service vehicles typically travel/operate on the same vehicle rails or tracks 118a, 118b and 120a, 120b that the container handling vehicles use for movement, and the engagement of the wheels/tracks of existing service vehicles with said vehicle rails prevents said existing service vehicles from turning through any angle. Instead, said existing service vehicles are locked into alignment with the grid and cannot turn round. Thus, if an operator wishes to move an existing service vehicle from the grid 100, back to the service area, they must operate the existing service vehicle in a reverse direction (in other words, a second vehicle movement direction that is opposite to the first vehicle movement direction). Reverse movement is awkward for the user of the existing service vehicle, because they have to turn their head through an extreme angle to look behind them, and this can result in increased likelihood of collisions due to failure to see nearby storage container handling vehicles that may be on the grid 100. For at least that reason, existing service vehicles are constrained to move in the reverse direction at a lower speed than in the forward direction, to mitigate likelihood of user-errors to an extent. However, the imposition of a speed limit lowers operating speed. Thus, the inflexibility of existing service vehicles leads to reduced operating effectiveness and efficiency.

The present disclosure addresses the above deficiency by providing an improved service vehicle which comprises improvements that provide for the service vehicle to be more conveniently and effectively operated, with greater speed/efficiency of operation. Said improvements comprise a seat that is configurable into at least a first configuration in which the seat faces a first (e.g. forward) seat direction relative to the vehicle's chassis, and a second configuration in which the seat faces a second (e.g. reverse) seat direction relative to the chassis, said second seat direction being different from (e.g. opposite to) the first seat direction. The disclosed service vehicle is arranged for operation with the seat in one or both of the first and second configurations, and the service vehicle can optionally and advantageously also include detection means (e.g. one or more sensors) for detecting whether the seat is in the first configuration and/or the second configuration, and optionally whether a user is seated in either seat position. These features advantageously permit the service vehicle to be more ergonomically operated for travel in the reverse direction, permitting full speed operation in the reverse direction (and automatic selection thereof) and thus improved effectiveness/efficiency of operation. Furthermore, optionally a user control of the service vehicle (by which the user controls movement means such as wheels of the service vehicle to move the service vehicle across the grid) interacts with the detection means, such that the user control is ergonomically adapted according to the detection (e.g. by swapping left and right joystick control directions when the seat is in the second/reverse configuration). This improves ergonomics and thereby reduces operator confusion/errors, again thereby providing for operation of the service vehicle in a more effective/speedy/efficient manner in both forward and reverse vehicle movement directions (compared with existing service vehicles that are only able to operate optimally in a single direction).

### Automated storage and retrieval system overview

Referring to the embodiment shown in Fig. 1, a grid 100 comprises a frame formed by a plurality of generally rectilinear, adjacent vertical columns 102 (each vertical column 102 comprising a plurality of storage spaces for storing a plurality of storage containers in a vertical stack) formed between vertical frame members ("frame members" otherwise being termed "structural members") 104 and extending in the X and Y directions 108, 110. The grid elements (frame members) may be fabricated of any appropriate material; for example, the frame members may be formed of metal, such as extruded aluminium. Storage containers or bins 112 can be stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. For example, a first set of parallel tracks comprises multiple pairs of vehicle rails or tracks 118a, 118b extending in a first grid direction (X direction 108), and a second set of parallel tracks comprises multiple pairs of vehicle rails or tracks 120a, 120b extending in a second grid direction (Y direction 110) that is angularly offset from the first grid direction, e.g. orthogonal to it. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 11, 120. A plurality of corresponding horizontal structural members can be included to support the first and second sets of parallel tracks in a substantially horizontal plane.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

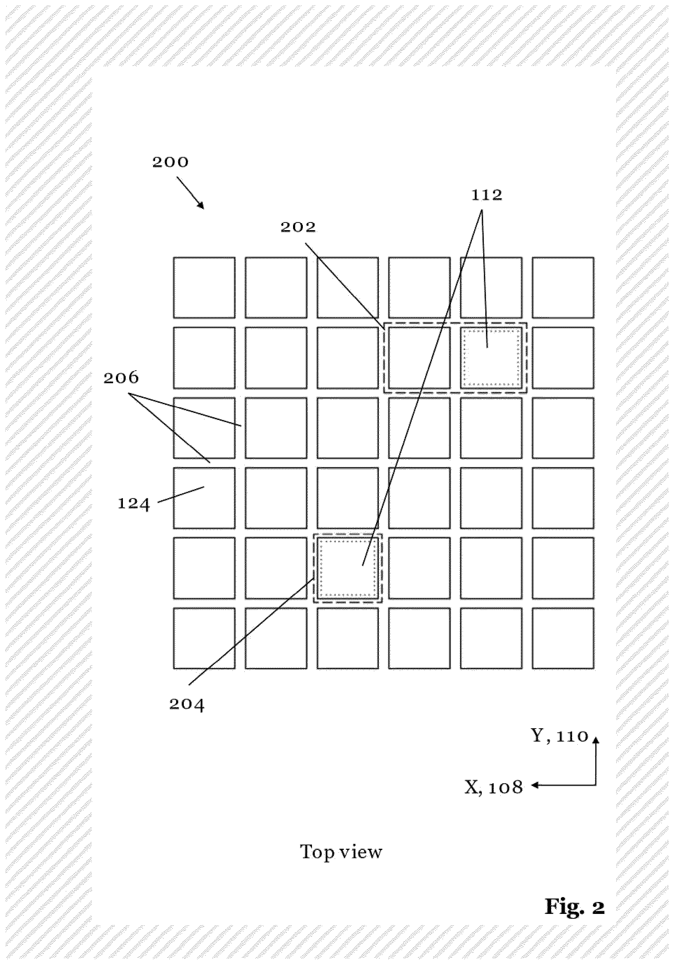

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

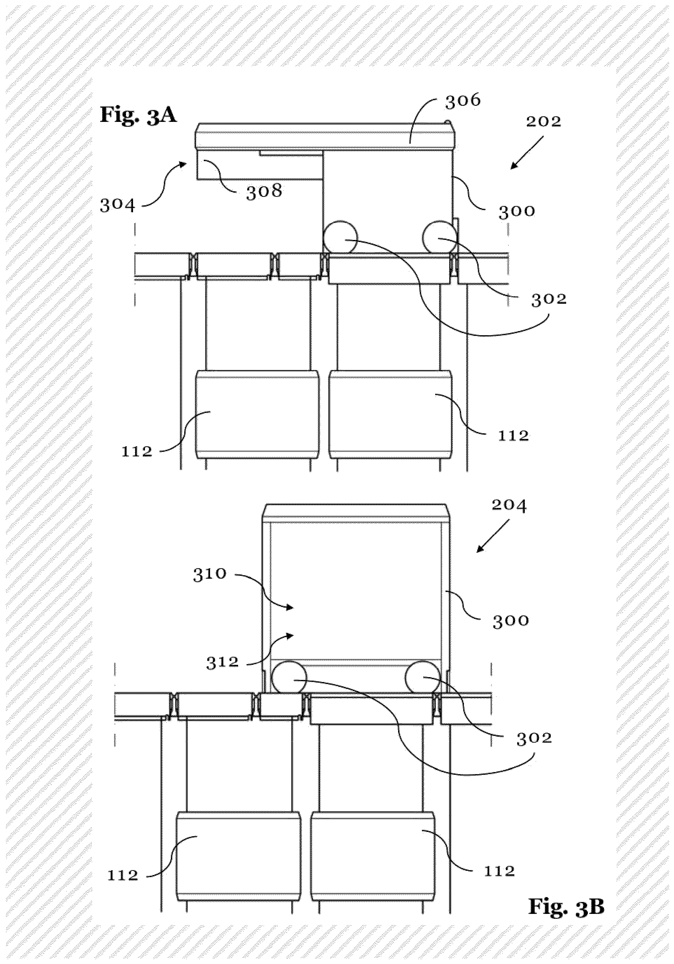

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

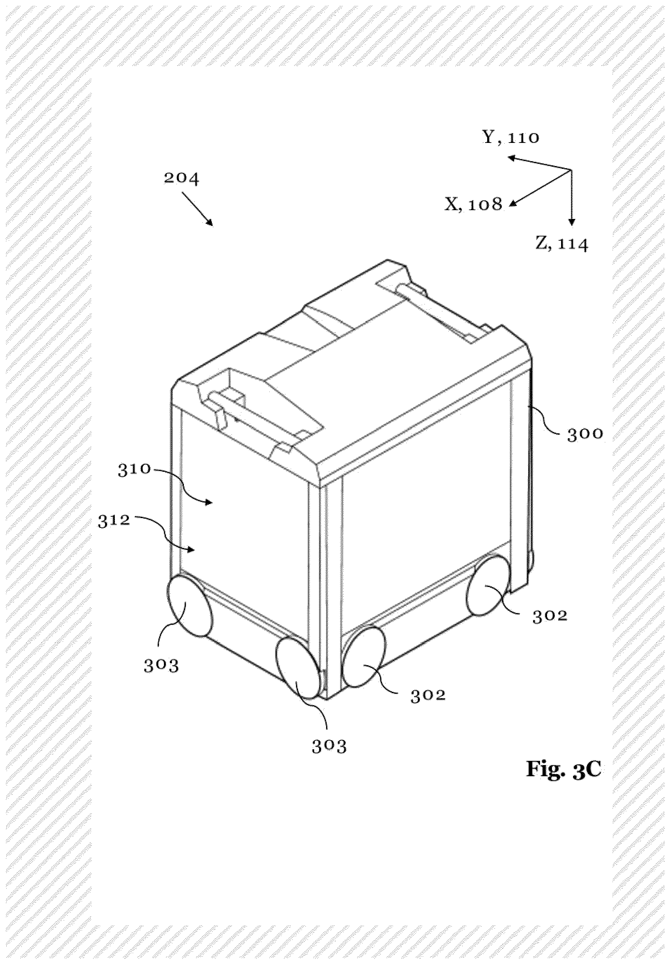

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

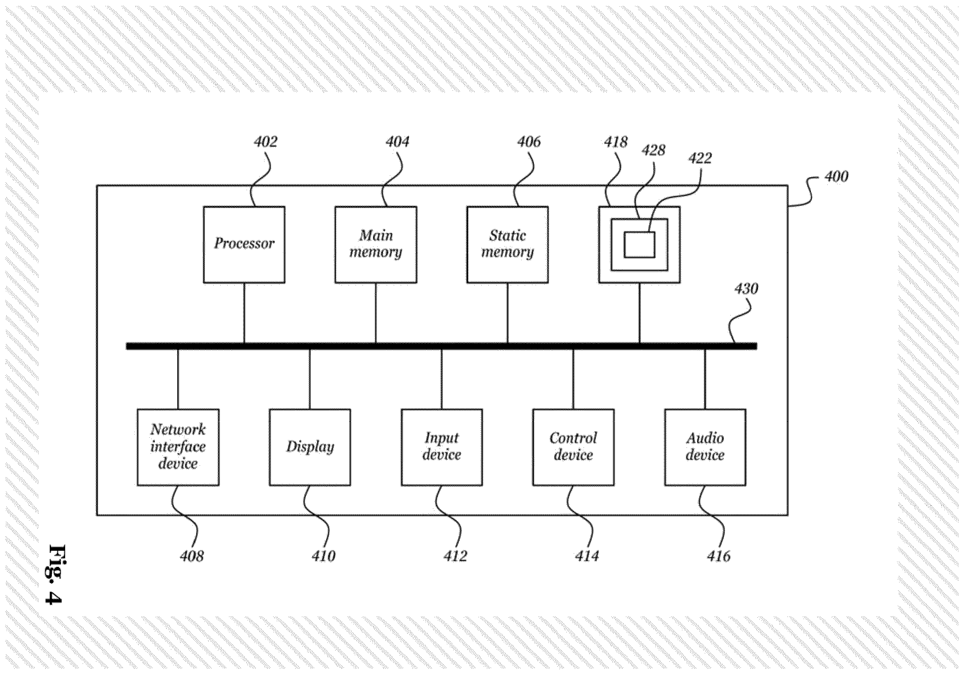

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

In the following description of aspects and embodiments of the disclosure will be discussed with reference to the drawings. It will be appreciated that the described aspects, examples and embodiments are not intended to limit the scope of protection, the scope of protection being defined instead by the appended claims. It will also be appreciated that features of the disclosed aspects and embodiments can be combined with those of other aspects and embodiments wherever indications to the contrary are absent.

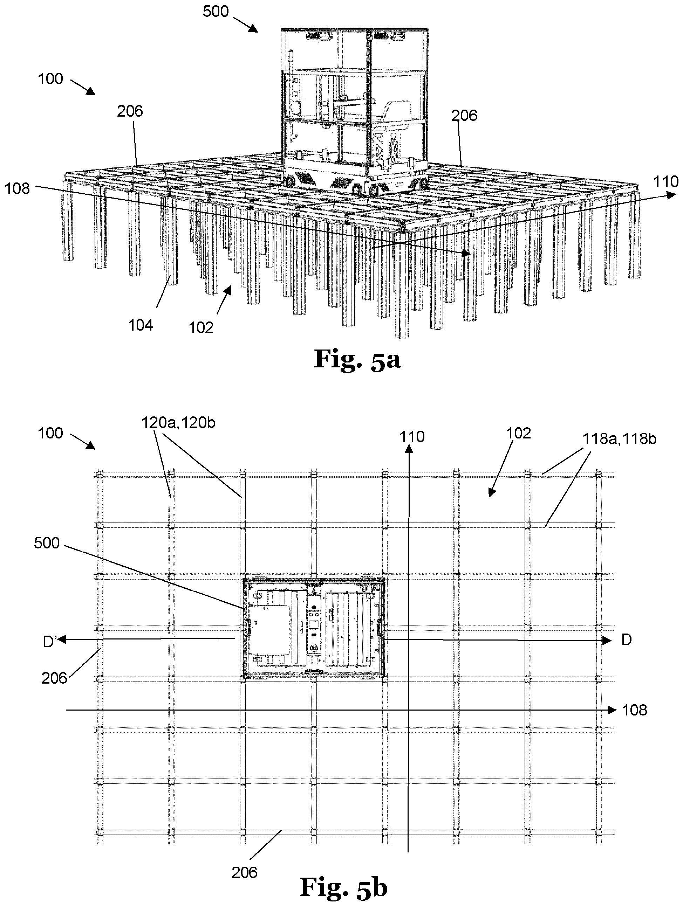

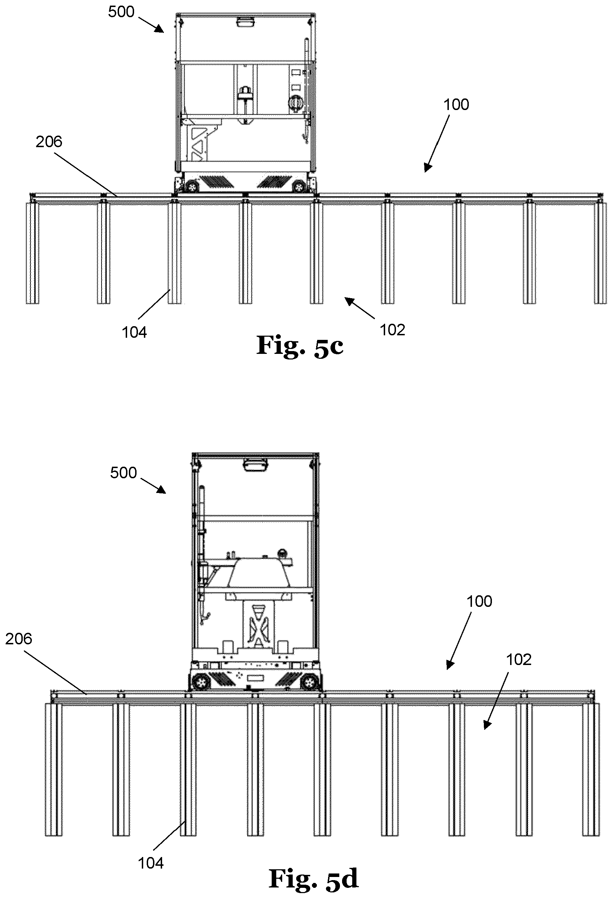

Figs. 5a to 5d show a service vehicle 500 for operation in an automated storage and retrieval system 100. The service vehicle 500 will be described further below, and advantageously comprises features that render it more effective/efficient in operation (for reasons already outlined above).

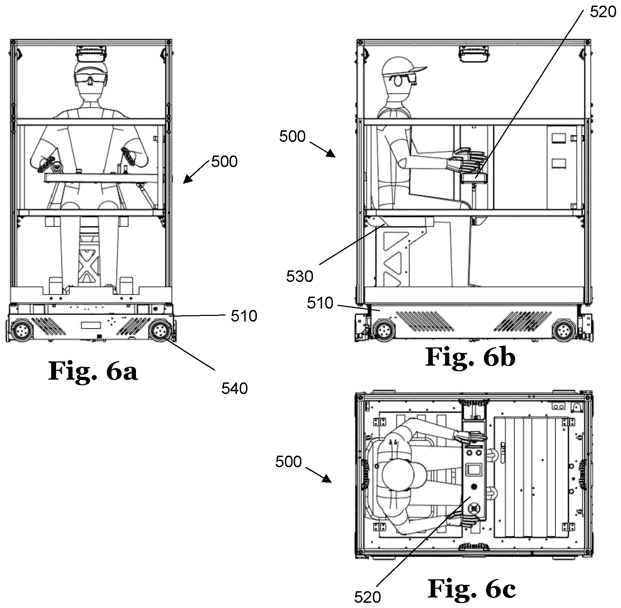

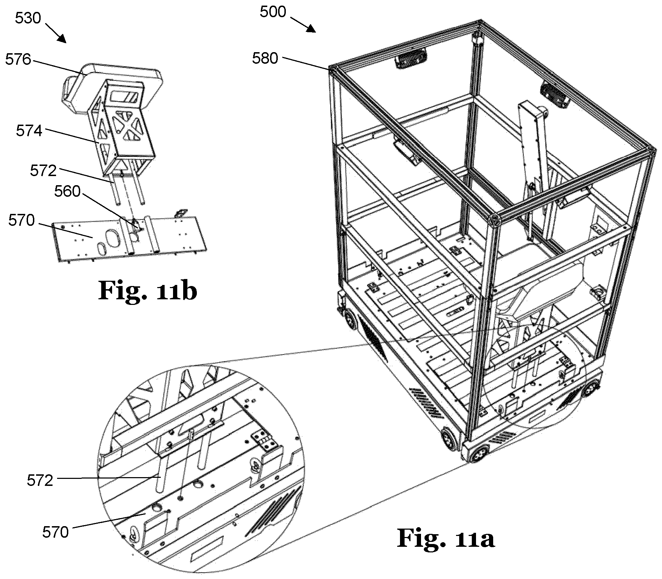

The service vehicle 500 shown in Figs. 5a to 5d is illustrated in more detail in Figs. 6a to 6c. The service vehicle 500 comprises a chassis 510, which has movement means 540 (otherwise termed "a drive system") for moving the service vehicle 500 over the grid 100 in a plurality of vehicle movement directions including at least a first vehicle movement direction D (e.g. a forward direction) and a second vehicle movement direction D' (e.g. a backward direction). The service vehicle 500 also has a seat 530 for supporting a user, and a user control 520 for providing a user with the ability to control the movement means 540 to move the service vehicle 500 across the grid 100. The seat can further comprise a seat frame 574, a seat cushion 576, and seat mounting means 572 (as shown in Fig. 11b).

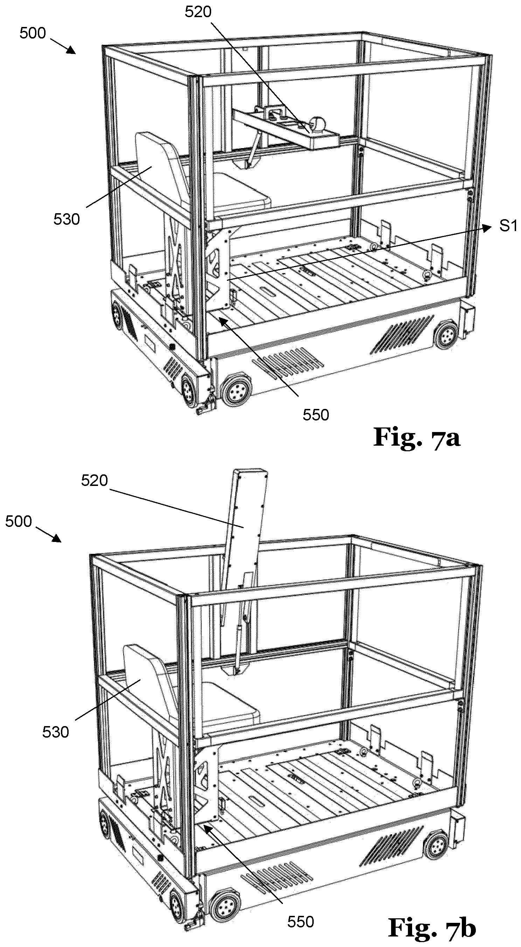

As shown in Figs. 7a and 7b, the seat 530 is configurable in a first configuration 550 in which the seat 530 faces a first seat direction S1 (e.g. corresponding to the first vehicle movement direction D which is for example a forward direction, e.g. a direction from a service area to a container handling vehicle that is on the grid and requires maintenance) relative to the chassis 510. The user control 520 provides the user with the ability to control the movement means 540 to move the service vehicle 500 over the grid 100 in the first vehicle movement direction D. Since in the first configuration 550 the user is facing the first (e.g. forward) seat direction S1, and the first seat direction S1 corresponds to the first vehicle movement direction D, the user is facilitated to control movement of the vehicle 500 in that direction, because for example they do not need to turn their head backwards or through an uncomfortable or impossible angle in order to see obstacles that are ahead of them. The user control 520 is preferably but optionally arranged to be ergonomically accessible by a user seated at the seat 530 when the seat 530 is in the first configuration 550.

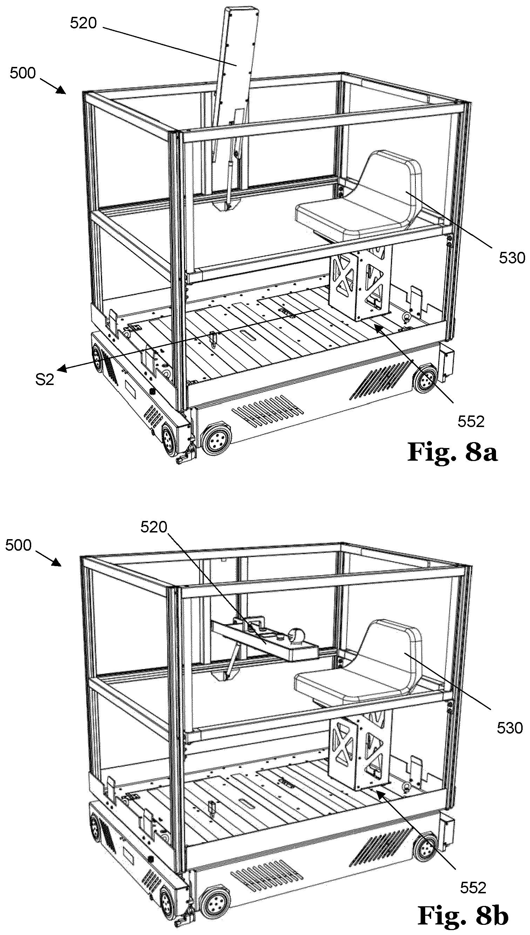

As shown in Figs. 8a and 8b, the seat 530 is also configurable in a second configuration 552 in which the seat 530 faces a second seat direction S2 (e.g. corresponding to the second vehicle movement direction D' which is for example a backward direction, e.g. a direction from the location of a container handling vehicle on the grid to a service area off the grid) relative to the chassis 510. The second seat direction S2 is different from the first seat direction S1, for example the first and second seat directions are opposite to each other, or in other words they differ by a rotation of approximately 180 degrees. In the illustrated examples, the seat is shown occupying a separate position on the vehicle chassis 510 that is translated along the chassis 510 compared with the position occupied by the seat 530 in the first configuration 550, however in other embodiments the two configurations 550, 552 can occupy the same position and can differ only by the angular direction of the seat 530. The user control 520 provides the user with the ability to control the movement means 540 to move the service vehicle 500 over the grid 100 in the second vehicle movement direction D'. Since in the second configuration 552 the user is facing the second (e.g. backward) seat direction S2, and the second seat direction S2 corresponds to the second vehicle movement direction D', the user is facilitated to control movement of the vehicle 500 in that direction. Thus, the user is facilitated to control movement of the vehicle 500 in the backward direction, because they do not need to turn their head backwards or through an uncomfortable or impossible angle in order to see obstacles that are behind the vehicle (said obstacles thus being ahead of the user, despite the vehicle moving in the backward direction). This permits lifting of a speed limit that was imposed on backward movement of existing service vehicles, which was necessary in order to reduce accidents due to the user's limited visibility and comfort when moving existing service vehicles in the backward direction, and thus the disclosed improved service vehicle can operate more effectively/efficiently in both directions, with fewer collisions and thus improved reliability. The user control 520 is preferably but optionally arranged to also be ergonomically accessible by a user seated at the seat 530 when the seat 530 is in the second configuration 552, such that operating errors are further reduced.

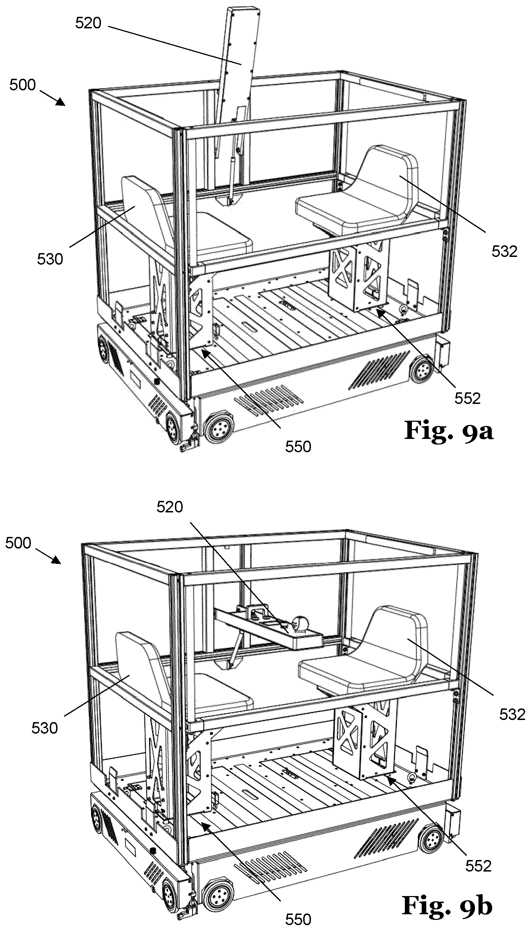

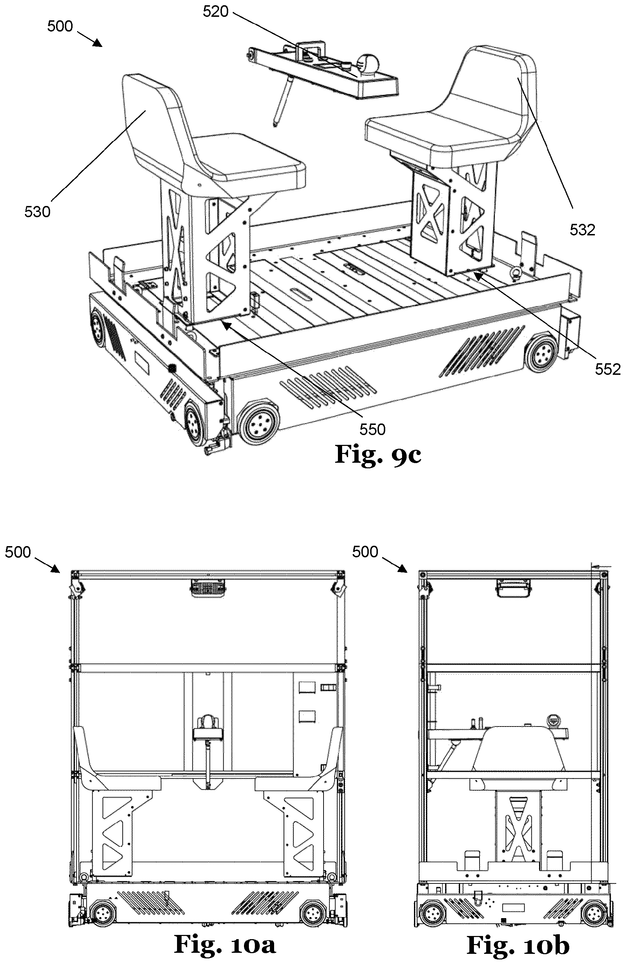

As shown in Figs. 9a to 9c, optionally a further seat 532 can be provided, such that seats can simultaneously be provided in the first configuration 550 and in the second configuration 552. Figs. 10a and 10b are, respectively, a side view, and an end view, of the service vehicle 500 shown in Fig. 9c. Use of the first configuration 550 or the second configuration 552 by the user (e.g. the user sitting in a seat 530 in the first configuration 550, or in seat 530 or a further seat 532 in the second configuration 552) can be detected, e.g. by a weight-actuated sensor, and used to enable or disable movement of the service vehicle 500, and to enable/disable respective speed limits as appropriate in the first and second vehicle movement directions D, D'. Alternatively, only a single seat 530 may be provided so as to avoid taking up space within the confines of the vehicle, and thereby leaving more space available for the occupant and/or spare parts/tools.

As shown in Figs. 11a and 11b, the seat 530 is (selectably) engageable with (e.g. mountable on) the vehicle's chassis 510 in the first configuration 550 and/or in the second configuration 552. This is provided for by means of a mount 570 that is typically part of the chassis 510 (for example the mount 570 can be a structural element of the chassis 510, but can alternatively be a separate member that is fixed to the chassis 510) and seat mounting means 572 of the seat 530 (for example this can be one or more protrusions or pins that can engage with corresponding recesses or holes in the chassis mount 570, or vice-versa said protrusions can be comprised in the chassis mount 570 instead and said recesses or holes can be comprised in the seat mounting means 572). As shown in Figs. 7a to 11a, in the first configuration 550 the seat 530 engages with the chassis 510 in a first position on the chassis 510. Optionally, in the second configuration 552 the seat 530 engages with the chassis 510 in a second position on the chassis 510, however in other embodiments the second configuration 552 can also use the first position but orient the seat 530 in a different orientation. Changing between the first and second configurations involves, for example, disengaging the seat 530 from the chassis 510 in the first configuration 550, and then engaging the seat 530 with the chassis 510 in the second configuration 552, and vice versa. By way of another example, the seat 530 can be rotatable about a mount 570 on the chassis 510, or the seat cushion 576 can rotate about the seat frame 574, for changing between the first configuration 550 and the second configuration 552. By way of further example, in other embodiments the seat 530 can be slidable on the chassis 510 by virtue of a rail or other type of linear attachment, for facilitating changing between the first and second configurations 550, 552.

As shown in Figs. 11b to 13d, the chassis 510 and/or the seat 530 can optionally and advantageously comprise detection means 560 (such as a sensor, e.g. a mechanically operated switch that is operated by virtue of engagement of at least a portion of the seat 530 with at least a portion of the chassis 510 or vice-versa, and/or a magnetic sensor and/or an optical sensor, either of which may be operated by virtue of proximity of at least a portion of the seat 530 with at least a portion of the chassis 510) for detecting the seat 530 in the first configuration 550 and/or in the second configuration 552. The detection means 560 can comprise respective detection means (e.g. one or more switches and/or one or more sensors) for each of the first and second configurations 550, 552, or the detection means can be shared by both first and second configurations 550, 552.

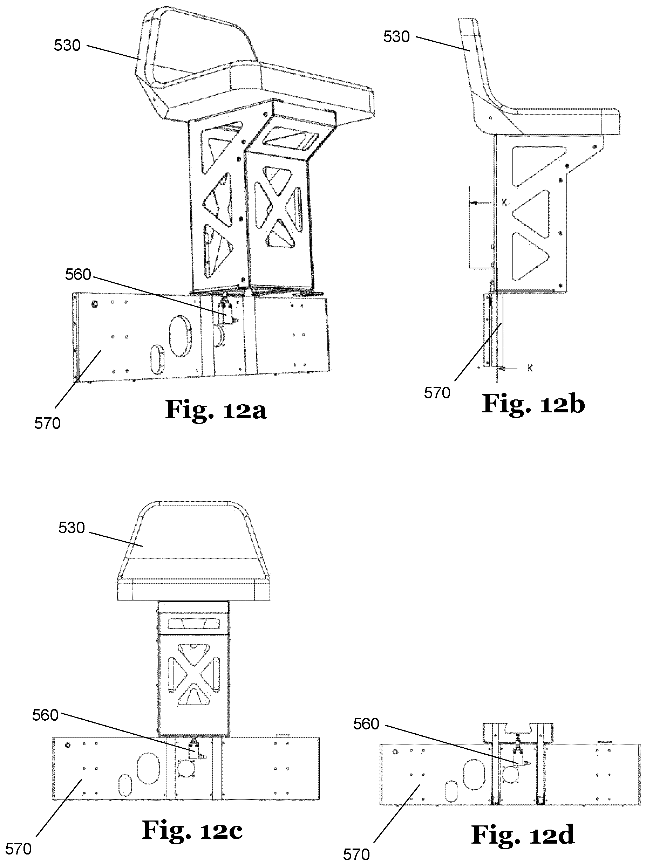

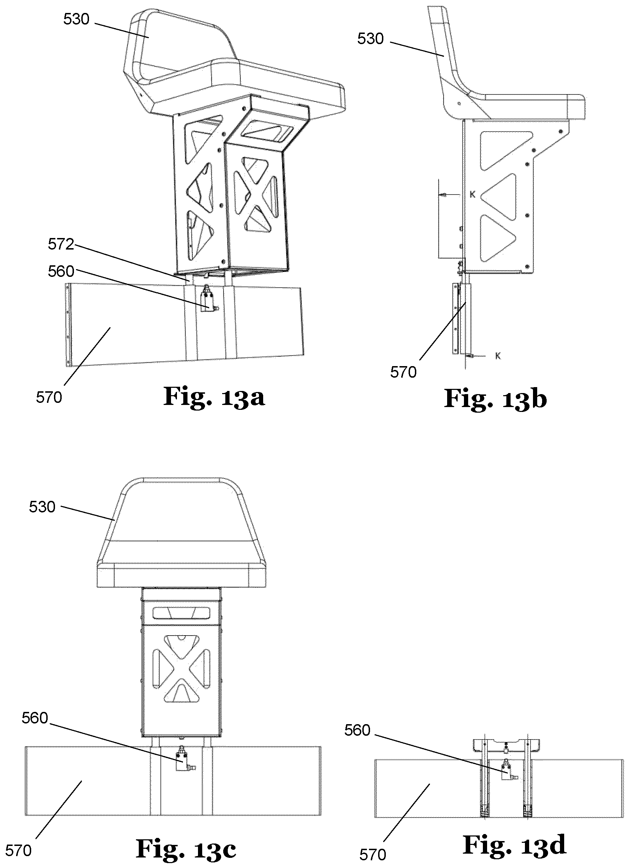

Figs. 12a to 12d show detection means 560, by way of example in the form of a mechanically operated switch, in the engaged/activated state by virtue of a portion of the seat 530 pushing on the switch when the seat 530 is fully engaged in the mount 570. Conversely, Figs. 13a to 13d show the detection means 560, in the disengaged/inactivated state by virtue of the seat 530 failing to fully push on the switch when the seat 530 is not fully engaged (by its seat mounting means 572) in the mount 570. Weight detection means such as a strain gauge, sprung switch, piezo-electric sensor etc. can also be included to detect whether a user is sitting on a seat or not.

Optionally but advantageously, the user control is responsive to the detecting by the detection means 560 of the first configuration 550 or the second configuration 552. In such embodiments, when the first configuration 550 is detected, the user control 520 is arranged for control of vehicle movement primarily in the first vehicle movement direction (and secondarily in the second vehicle movement direction). "Primarily" means that full speed movement is permitted, while "secondarily" means that a speed limit may be imposed, e.g. in order to reduce operator errors that are made more likely when an operator is having to look backwards over their shoulder when moving backwards relative to the direction they are facing. Conversely, when the second configuration 552 is detected, the user control 520 is arranged for control of vehicle movement primarily in the second vehicle movement direction (and secondarily in the first vehicle movement direction).

By way of example, the user control 520 can include one or more of a control button, a joystick control, a touch detector, an indicator, a display screen, a sound generator, and a haptic feedback device. In such examples, a joystick control which has left and right directional controls can be arranged to reverse said left and right directional controls when the second configuration 552 (or use of it by virtue of detection of a user seated in the seat) is detected compared to when the first configuration 550 (or use of it) is detected. By way of further example, optionally a display screen can be arranged to be viewed from the first seat direction S1 when the first configuration 550 is detected, and the display reversed so as to be suitable for being viewed from the second seat direction S2 when the second configuration 552 is detected.

Preferably but optionally, movement of the vehicle can be inhibited when neither of the first or second configurations 550, 552 are detected by the detection means 560, and/or when no weight (i.e. no user) is detected on the seat(s) 530, 532 in either of the first and second configurations 550, 552. This helps to keep the user safe by preventing movement of the service vehicle 500 when the user is not seated.

By way of a further safety measure, the vehicle 500 preferably but optionally provides a safety cage 580 for enclosing the operator, thereby protecting them from collisions with other objects that maybe present on or operating on the grid 100 (such as container handling vehicles). The user control 520 can optionally be mounted to the safety cage 580 (preferably but optionally in a position that is ergonomically accessible by the user in both the first and second configurations 550, 552 - for example in a position substantially midway between the first and second seat positions), in which case the user control 520 is advantageously stowable to take up less space within the safety cage 580 (e.g. by virtue of being mounted on a hinged platform), so that the user can stow the user control 520 before/while reconfiguring the seat 530, and then can unstow/extend the user control 520 after reconfiguring the seat and before operating the user control to move the service vehicle 500 across the grid 100 in the opposite direction from that which was moved in before the reconfiguration.

Preferably but optionally, the service vehicle 500 is arranged for transporting a container handling vehicle (or other vehicle that may be on the grid 100) between the grid 100 and a service area, by virtue of further comprising means for attaching to such a container handling vehicle. Such means can comprise, by way of example, one or more of a robotic arm, a hook, a barb, a fastener (e.g. a threaded fastener), a magnetic attachment (e.g. electromagnet or switchable permanent magnet), and/or a suction device (e.g. a suction cup or vacuum attachment).

In an advantageous embodiment, the movement means comprises one or more motors 542 (e.g. electric and/or hydraulic motors), and/or one or more wheels 544 and/or rollers and/or tracks. Wheels 544 can be effective for engaging with the first and second sets of parallel tracks, while rollers and/or tracks can be useful for spreading weight over the grid 100 thereby reducing potential for damage and increasing the amount of weight able to be carried by the grid 100. When the movement means comprises one or more wheels 544, at least one wheel 544 can comprise a hub motor, which is an especially compact arrangement.

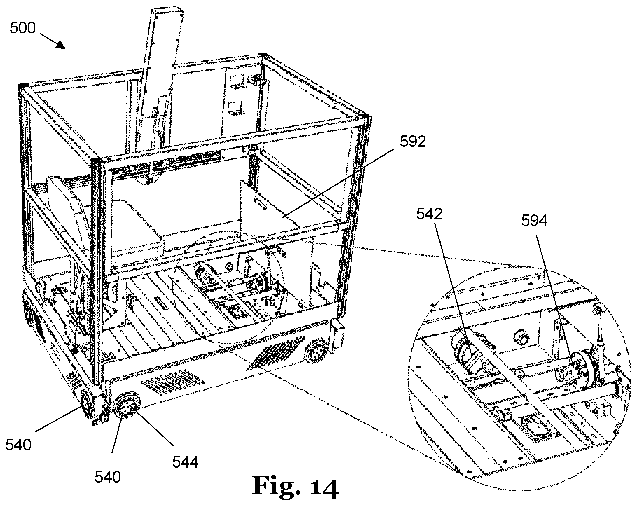

The service vehicle 500 can optionally further comprise a manual brake release 594, as shown in Fig. 14, that can be accessed by a user to override the automatic safety/parking brake of the service vehicle 500 should that be necessary. For example, the service vehicle 500 may actuate a safety brake when movement is not being commanded by the user via the user control 520, and/or when the detection means 560 has not detected the seat 530 engaged with the chassis 510 in either of the first or second configurations 550, 552, or when a user has not been detected sitting in the seat 530 or further seat 532. Should any of these interlocks be incorrectly engaged, thereby causing the safety brake to be engaged, the service vehicle 500 would not move on the grid 100, and the operator of the vehicle 500 would not be able to return the service vehicle 500 to the service area. The manual brake release 594 is therefore provided for such an eventuality. The manual brake release 594 can optionally be shielded from accidental access, by a service panel 592 that covers the manual brake release 594 and thereby prevents its inadvertent operation.

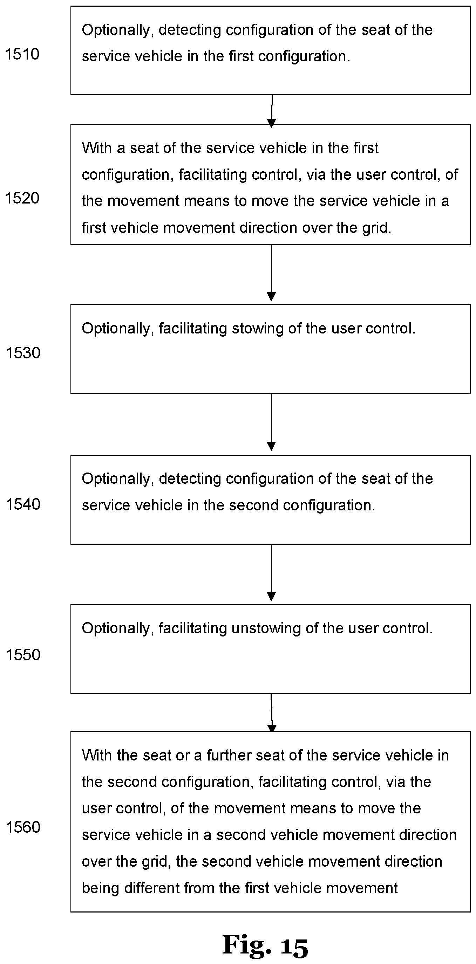

By way of further example, a method of operating a service vehicle 500 according to the service vehicle 500 described above with reference to Figs. 5a to 14 will now be described with reference to Fig. 15.

The method may begin with the service vehicle 500 already configured in the first configuration (see Fig. 7a), with the seat 530 installed in the first configuration 550, or alternatively (optionally) a step 1510 of detecting configuration of the seat 530 of the service vehicle 500 in the first configuration 550 may be performed. As part of this step, for example, a user may install the seat mounting means 572 of the seat 530 into the mount 570 of the chassis 510, and the detection means 560 may detect the seat 530 installed in the first configuration 550.

Subsequently, with the seat 530 of the service vehicle 500 detected in the first configuration 550, at step 1520 a user can control, via the user control 520, the movement means 540 to move the service vehicle 500 in the first vehicle movement direction D over the grid 100, and the service vehicle 500 can facilitate such control (e.g. by providing a control connection between the user control 520 and the movement means 540 such that activation of the user control in a certain direction causes supply of power to the movement means to cause the movement means to move the service vehicle in a corresponding direction).

Optionally, at step 1530, as shown in Fig. 7b the stowing of the user control 520 can be facilitated, e.g. by motorised means or simply by manually operable means such as the provision of a hinged connection between the user control 520 and the safety cage 580 to which the user control 520 can be mounted. Thus, the user can stow the user control 520 (or alternatively this step may be wholly or partially automated), so as to increase the amount of space available within the confines of the vehicle 500 (e.g. within the safety cage 580) to assist the user to reconfigure the seat 530.

Optionally at step 1540, the user can then reconfigure the seat 530 of the service vehicle 500 into the second configuration 552 as shown in Fig. 8a (alternatively a further seat 532 can be provided in the second configuration 552, in which case the user can leave the originally described seat 530 in the first configuration 550). The service vehicle 500 can detect the configuration of the seat 530 into the second configuration 552 by virtue of the detection means 560.

Optionally, e.g. if the user control 520 had been stowed at step 1530, at step 1550 the user control 520 can be unstowed as shown in Fig. 8b. Similarly to step 1530, the stowing of the user control 520 can be facilitated e.g. by motorised means or simply by the provision of a hinged connection between the user control 520 and the safety cage 580 to which the user control 520 can be mounted.

At step 1560, with the seat 530 or a further seat 532 of the service vehicle 500 detected in the second configuration 552, the user can control, via the user control 520, the movement means 540 to move the service vehicle 500 in the second vehicle movement direction D' over the grid 100 (the second vehicle movement direction D' being different from the first vehicle movement direction D, for example the first vehicle movement direction being a forward direction and the second vehicle movement direction being a backward direction), and/or the second vehicle movement direction being opposite to the first vehicle movement direction. The service vehicle 500 can facilitate such control (e.g. by providing a control connection between the user control 520 and the movement means 540).

By virtue of the provision for the seat 530 to be reconfigured between a first configuration 550 in which the seat 530 faces the first seat direction S1 relative to the chassis 510 and in which the first seat direction S1 corresponds to the first vehicle movement direction D, and a second configuration 552 in which the seat 530 (as shown in Figs. 8a and 8b) or a further seat 532 (as shown in Figs. 9a to 9c) faces in the second seat direction S2 relative to the chassis 510 and in which the second seat direction S2 corresponds to the second vehicle movement direction D', it is provided that a user can face in the direction of travel and thereby more easily see potential obstacles, and thus the need for a restricted speed limit in the reverse vehicle direction is obviated, leading to more effective/efficient vehicle operation. Furthermore, by facilitating the user control 520 to be stowed (as shown in Figs. 7b, 8a and 9a), and unstowed (as shown in Figs. 7a, 8b and 9b) more space within the vehicle 500 is made available, specifically more space inside the vehicle's safety cage 580 is provided, thereby increasing the speed with which a user can reconfigure the seat 530, thereby improving operating efficiency.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A service vehicle for operation in an automated storage and retrieval system, said automated storage and retrieval system comprising a grid of structural members amongst which a plurality of storage spaces are provided for storing a plurality of storage containers, wherein the service vehicle comprises:
a chassis having movement means for moving the service vehicle over the grid in a plurality of vehicle movement directions including at least a first vehicle movement direction and a second vehicle movement direction different from the first vehicle movement direction;
a user control providing for a user to control the movement means; and
a seat for supporting a user;
wherein the seat is configurable in at least a first configuration in which the seat faces a first seat direction relative to the chassis, and a second configuration in which the seat faces a second seat direction relative to the chassis, said second seat direction being different from the first seat direction.

2. The service vehicle of claim 1, wherein in the first configuration the seat faces the first vehicle movement direction, and in the second configuration the seat faces the second vehicle movement direction, wherein the first vehicle movement direction is a forward direction and the second vehicle movement direction is a backward direction.

3. The service vehicle of any preceding claim, wherein the seat is engageable with the chassis in the first configuration and/or in the second configuration.

4. The service vehicle of any preceding claim, wherein in the first configuration the seat engages with the chassis in a first position on the chassis, and in the second configuration the seat engages with the chassis in a second position on the chassis.

5. The service vehicle of any preceding claim, wherein the chassis and/or the seat comprises detection means for detecting the seat in the first configuration and/or in the second configuration.

6. The service vehicle of claim 5, wherein the detection means comprises a sensor in the form of at least one of: a mechanically operated switch that is operated by virtue of engagement of at least a portion of the seat with at least a portion of the chassis or vice-versa; and a magnetic and/or an optical sensor operated by proximity of at least a portion of the seat with at least a portion of the chassis.

7. The service vehicle of claim 5 or 6, wherein the detection means comprises a respective sensor for each of the first configuration and the second configuration.

8. The service vehicle of any of claims 5 to 7, wherein the user control is responsive to the detecting, wherein a respective speed limit in at least one of the first and second vehicle movement directions is dependent upon the detection.

9. The service vehicle of any of claims 5 to 8, wherein movement is inhibited when the detection means detects neither the first configuration nor the second configuration

10. The service vehicle of any preceding claim, wherein the service vehicle further comprises a safety cage arranged for protecting a user while they are occupying the seat, and wherein the user control is configured such that it can be stowed to take up less space within the safety cage, or unstowed for use.

11. The service vehicle of any preceding claim, arranged for operating in an automated storage and retrieval system in which the structural members comprise a first set of parallel tracks arranged in a substantially horizontal plane and extending in a first grid direction, and a second set of parallel tracks arranged in the plane and extending in a second grid direction that is orthogonal to the first grid direction, wherein the grid comprises a plurality of adjacent vertical columns formed between vertical frame members, each vertical column accessible via a respective opening formed between a pair of neighboring tracks of the first set and a pair of neighboring tracks of the second set, each of said vertical columns arranged for accommodating a plurality of storage containers in a vertical stack.

12. An automated storage and retrieval system, comprising:
a grid of structural members amongst which a plurality of storage spaces are provided for storing a plurality of storage containers;
one or more container handling vehicles operable on the grid for retrieving storage containers from and storing storage containers into the storage spaces, and for transporting the storage containers horizontally across the grid; and
the service vehicle of any of claims 1 to 11.

13. A method of operating the service vehicle of any of claims 1 to 11 in an automated storage and retrieval system according to claim 12, the method comprising:
when the seat of the service vehicle is in the first configuration, facilitating control, via the user control, of the movement means to move the service vehicle in the first vehicle movement direction over the grid; and
when the seat or a further seat of the service vehicle is in the second configuration, facilitating control, via the user control, of the movement means to move the service vehicle in the second vehicle movement direction over the grid.

14. The method of claim 13, further comprising:
before facilitating control of the movement means to move the service vehicle in the first vehicle movement direction, detecting configuration of a seat of the service vehicle in the first configuration; and/or
after facilitating control of the movement means to move the service vehicle in the first vehicle movement direction, and before facilitating control of the movement means to move the service vehicle in the second vehicle movement direction, detecting configuration of a seat of the service vehicle in the second configuration.

15. The method of claim 14 further comprising:
between facilitating control of the movement means to move the service vehicle in the first vehicle movement direction and detecting configuration of the seat of the service vehicle in the second configuration, facilitating stowing of the user control, and subsequently facilitating unstowing of the user control before facilitating controlling the movement means to move the service vehicle in the second vehicle movement direction.
